**Europäisches Patentamt**

**European Patent Office**

**Office européen des brevets**

(11) Numéro de publication: **0 149 939**
**A1**

# DEMANDE DE BREVET EUROPEEN

(21) Numéro de dépôt: **84402634.4**

(22) Date de dépôt: **18.12.84**

(51) Int. Cl.⁴: **G 01 S 7/62**
**G 01 S 15/02, G 01 S 15/89**

(30) Priorité: **23.12.83 FR 8320682**

(43) Date de publication de la demande:
**31.07.85 Bulletin 85/31**

(84) Etats contractants désignés:
**AT BE DE GB IT NL SE**

(71) Demandeur: **CGR ULTRASONIC**
**9, Chaussée de Paris**
**F-77102 Villenoy-les-Meaux(FR)**

(72) Inventeur: **Maerfeld, Charles**
**C/O THOMSON-CSF SCPI 173, bld Haussmann**
**F-75379 Paris Cédex 08(FR)**

(74) Mandataire: **Barbin le Bourhis, Joel et al,**
**THOMSON-CSF SCPI 173, boulevard Haussmann**
**F-75379 Paris Cedex 08(FR)**

(54) Procédé d'imagerie ultrasonore, en couleur, de la structure interne d'un corps.

(57) Procédé d'imagerie ultrasonore en couleur utilisant deux paramètres acoustiques distincts.

Selon l'invention, le signal d'écho reçu par la sonde (11) est utilisé en tant que tel (15) pour l'élaboration du signal de luminance et est aussi soumis à une analyse spectrale (26) permettant de déterminer l'absorption (30), le signal d'absorption servant à élaborer des signaux de chrominance.

L'invention permet d'améliorer la caractérisation tissulaire en échographie.

## FIG_1

EP 0 149 939 A1

## PROCEDE D'IMAGERIE ULTRASONORE, EN COULEUR,
## DE LA STRUCTURE INTERNE D'UN CORPS

L'invention concerne un procédé d'imagerie ultrasonore de la structure interne d'un corps, faisant appel à la couleur pour améliorer la caractérisation des constituants de cette structure interne, c'est-à-dire par exemple pour mieux caractériser les tissus, dans le cas de l'échographie médicale.

Pratiquement tous les échographes utilisés actuellement dans le monde sont conçus pour reconstituer l'image en exploitant les manifestations d'un unique phénomène affectant la propagation des ondes ultrasonores, à savoir les échos réfléchis vers la sonde. La reconstruction de l'image se fait sur un écran de télévision. Autrement dit, pour chaque direction de "tir" correspondant à une séquence émission-réception, on relève le signal d'écho qui revient vers la sonde et on affecte à chaque point de la ligne de balayage correspondante sur l'écran une luminosité dépendant de l'amplitude de l'écho reçu. On dispose actuellement de convertisseurs Analogique-Numérique rapides qui permettent de numériser et stocker en temps réel toutes les informations d'une ligne ; l'échantillonnage du signal converti permet de restituer chaque point ou "pixel" de la ligne de balayage, auquel correspond un point du corps situé à une certaine profondeur. En d'autres termes, chaque échantillon de signal d'écho qui parvient à la sonde après un intervalle de temps correspondant au temps nécessaire à l'onde ultrasonore pour aller jusqu'à la source de l'écho et revenir jusqu'à la sonde, est représentatif de la réflexion partielle de l'onde ultrasonore au point correspond du corps, le long de la direction de tir. La prise en compte de l'amplitude de l'écho ultrasonore en tant que paramètre d'imagerie s'est jusqu'à présent imposée car, de tous les phénomènes qui affectent la propagation des ultrasons dans un corps, c'est celui qui peut être mesuré avec la meilleure précision.

Cependant d'autres phénomènes exploitables affectent la propagation des ondes ultrasonores dans le corps. A titre d'exemples non limitatifs, on peut citer la vitesse de propagation de l'onde qui peut varier, l'énergie rétro-diffusée par les différents organes de la structure ou la rugosité de leurs surfaces, et surtout l'absorption de l'onde ultrasonore au fur et à mesure de sa propagation dans ladite structure interne.

Pour ce dernier phénomène en particulier, on a montré qu'il est possible de calculer l'absorption en un certain nombre de points de la structure à représenter sans connaître les coefficients de réflexion à ces endroits. La méthode qui sera explicitée plus loin a été décrite en 1976 par Kuc. Il s'agit de mesurer les variations du centre de gravité du spectre des échos reçus (c'est-a-dire les variations de la fréquence moyenne si ce spectre est gaussien) en fonction du temps. Autrement dit, un traitement convenable appliqué au signal d'écho permet d'établir une certaine "cartographie" de l'absorption. Cependant, la résolution d'une image reproduisant le taux d'absorption en tous points serait assez médiocre car le calcul du coefficient d'absorption en un point nécessite de traiter des échantillons de signal d'écho relativement long, c'est-a-dire sur une "fenêtre" pouvant atteindre quelques dizaines de micro-secondes. Or, en exploitant directement le signal d'écho, on arrive à obtenir une résolution axiale (suivant le sens des lignes de balayage) inférieur à la micro-seconde. La résolution latérale de l'image d'absorption (parallèlement à la direction de balayage) est également médiocre.

On a aussi proposé d'afficher l'image de la structure interne du corps en couleur, en utilisant un tube cathodique trichrome de télévision. Ainsi, le brevet américain 4 230 124 propose d'affecter à l'amplitude de l'écho reçu et fenêtré une certaine gamme de couleurs, par exemple, 0 dB : noir, 2-4 dB : gris-rouge, ..., 28 à 30 dB : jaune, supérieur à 30 dB : blanc. Le brevet américain 4 228 804 décrit un autre type de codage-couleur du signal d'écho. Selon ce document, les échos sont appliqués à trois filtres de bandes passantes différentes et les signaux résultants servent à l'élaboration des trois couleurs primaires. Dans ces deux cas, cependant, on ne fait qu'exploiter le paramètre traditionnel (l'amplitude de l'écho) en tant que tel, de sorte que les avantages que l'on peut en tirer sur le plan de la caractérisation tissulaire sont faibles.

L'idée de base de l'invention consiste à améliorer la caractérisation tissulaire (pour ce qui concerne l'application particulière à l'échographie médicale) en superposant sur l'écran d'un tube cathodique trichrome la représentation d'au moins deux phénomènes distincts affectant la propagation des ultrasons dans la structure interne du corps, l'un des phénomènes étant exploité pour élaborer le signal de luminance et l'autre phénomène étant exploité pour élaborer les signaux de chrominance.

En d'autres termes, l'invention concerne un procédé d'imagerie ultrasonore de la structure interne d'un corps, une image étant acquise par une succession de séquences émission-réception suivant des directions différentes choisies, caractérisé en ce qu'il consiste, pour chaque séquence, à élaborer un premier signal représentatif d'un premier phénomène acoustique affectant la propagation des ondes ultrasonores dans ledit corps et au moins un second signal représentatif d'au moins un second phénomène acoustique, distinct, affectant ladite propagation, et à reconstituer l'image en utilisant ledit premier signal pour l'élaboration d'un signal de luminance et ledit second signal pour l'élaboration de signaux de chrominance.

De préférence, le signal de luminance sera élaboré à partir de l'amplitude de l'écho qui demeure le paramètre principal assurant la résolution optimale. La mise en oeuvre du procédé ne peut donc en aucun cas aboutir à une dégradation de la résolution d'image. En revanche, la transformation en signaux de chrominance d'un autre phénomène affectant la propagation des ondes ultrasonores dans la structure et notamment l'un de ceux qui ont été énoncés ci-dessus, aboutira bien à une amélioration de la caractérisation tissulaire (car le phénomène pris en compte est différent) même si sa résolution est médiocre, puisqu'on sait que les signaux de chrominance en télévision couleur ont une bande passante plus faible et peuvent donc sans inconvénient être générés à partir d'une information n'offrant elle-même qu'une résolution faible, ce qui est le cas, entre autres, pour le phénomène d'absorption ultrasonore déduit ou "extrait" des informations d'écho.

C'est surtout (mais non exclusivement) en exploitant l'absorption que l'on peut espérer obtenir les résultats les plus intéressant sur le plan de la caractérisation tissulaire et c'est pourquoi la suite de la description se limitera à des exemples utilisant l'amplitude des échos (paramètre primaire) pour élaborer le signal de luminance et l'absorption (paramètre secondaire) pour élaborer les signaux de chrominance.

L'invention sera mieux comprise et d'autres avantages de celle-ci apparaîtront mieux à la lumière de la description qui va suivre d'un système d'échographie conforme à son principe, donnée à titre d'exemple et faite en référence aux dessins annexés dans lesquels :

- la figure 1 est un schéma-bloc d'un système d'échographie à visualisation en couleur, conforme aux principes de l'invention ;

- la figure 2 est un schéma-bloc d'une variante d'un sous-ensemble de la figure 1.

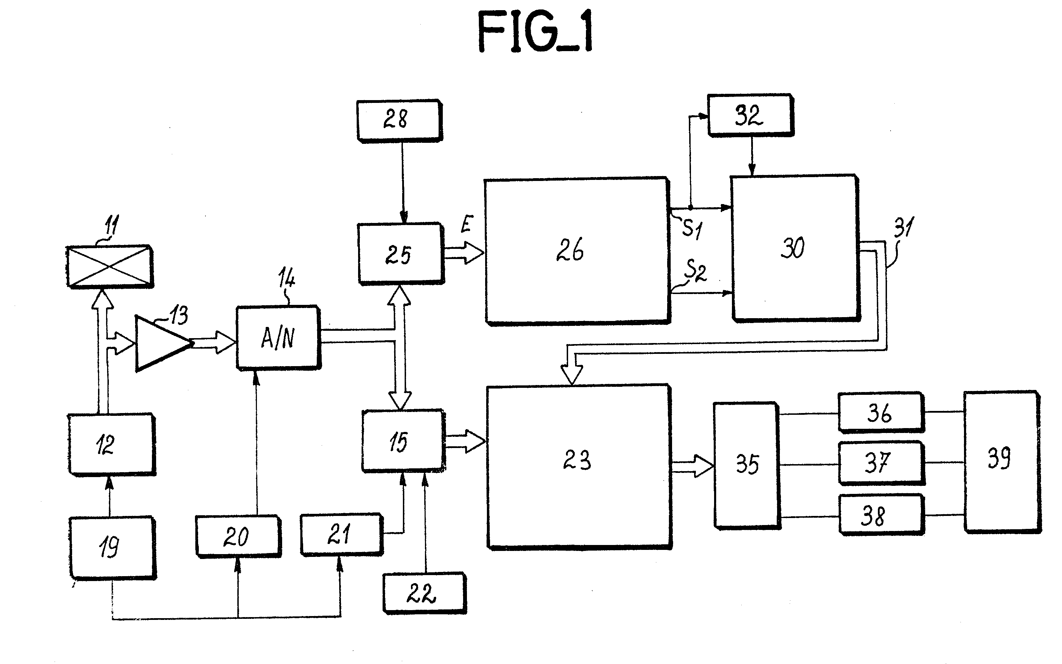

Le système représenté à la figure 1 comporte une sonde à transducteur(s) piézo-électrique(s) 11 connue en soi, un circuit émetteur 12 couplé à la sonde pour engendrer périodiquement des signaux électriques d'excitation appliqués à la sonde, des moyens d'amplification 13 dont l'entrée est reliée à la sonde, un convertisseur Analogique-Numérique 14 relié à la sortie des moyens d'amplification 13 et une mémoire tampon 15 chargée par le convertisseur 14. Cette mémoire a par exemple la capacité nécessaire pour stocker tous les mots (sur 8 bits par exemple) correspondant aux valeurs de tous les pixels d'une ligne de l'image représentatifs des différentes valeurs d'amplitude du signal d'écho reçu et transmis par l'amplificateur 13. La numérisation se fait ici directement sur le signal mais, comme on le verra plus loin, elle

5

peut se faire après démodulation complexe sur les deux voies, "réelle et imaginaire". La mémoire 15 peut être chargée avec des valeurs représentatives d'une détection d'enveloppe ou d'un calcul d'amplitude ou encore d'un calcul d'énergie sur une "fenêtre". Tous les moyens qui viennent d'être décrits sont classiques. Ils permettent de stocker sous forme numérique dans la mémoire 15 toutes les valeurs du signal de luminance d'une ligne, représentant l'évolution de l'amplitude du signal d'écho reçu, qui reste le paramètre principal de la représentation de l'image d'échographie. Les sous-ensembles 12, 14 et 15 sont pilotés au rytme d'un circuit de synchronisation de tirs 19. Ce dernier déclenche directement l'émetteur 12 et synchronise par ailleurs une horloge d'échantillonnage 20 pilotant le convertisseur 14 et un compteur d'écriture 21 pilotant la mémoire tampon 15. Cette dernière est lue au rytme d'un compteur de lecture 22 pour charger une partie d'une mémoire principale 23 ayant la capacité nécessaire pour stocker toutes les informations de luminance et de chrominance nécessaires à la reconstruction d'une image en couleur.

Les informations de luminance de toute une image parviennent donc, pixel par pixel et ligne par ligne dans la mémoire 23. Avant de décrire les moyens d'élaboration des signaux de chrominance liés, selon l'exemple, à l'évolution de l'absorption le long des différentes directions de tir, on va expliciter comment on peut déduire l'absorption en un point (ou plus exactement au voisinage d'un point) en fonction du signal d'écho réfléchi en ce point.

Il est habituel et connu de "conformer" chaque signal d'excitation pour que la sonde génère en réponse une onde ultrasonore de spectre gaussien, qui se propage dans la structure à représenter. Dans ce cas, on montre que le spectre de l'écho (ou de toute partie de cet écho) est aussi gaussien, mais avec une fréquence moyenne décalée vers les basses fréquences en fonction de la profondeur d'exploration, car le corps se comporte comme un filtre passe-bas.

Si le spectre d'émission est (sensiblement gaussien, on peut écrire la représentation du signal d'émission en fonction de la

fréquence $\underline{f}$, sous la forme :

$$S(f) = e^{\dfrac{-(f-fo)^2}{2\sigma^2}} \qquad (1)$$

où $f_o$ est la fréquence moyenne du spectre gaussien et $\sigma$ sa variance qui, dans le cas d'un spectre gaussien correspond sensiblement à l'écart de fréquences entre les deux points à - 3 dB de la courbe de Gauss.

La structure à représenter agit comme un filtre. Par conséquent, à une distance $\underline{x}$ de la sonde (dans la direction de tir) la fonction de transfert s'exprime :

$$H(f) = e^{-2\alpha f x} \qquad (2)$$

$\alpha$ étant l'absorption exprimée en dB/cm.MHz. En supposant celle-ci constante sur tout le parcours $\underline{x}$. Par conséquent, l'écho reçu s'exprime :

$$S_r(f) = e^{\left(\dfrac{-(f-f_o)^2}{2\sigma^2} - 2\alpha fx\right)}$$

La fréquence moyenne ou fréquence centrale $f'_o$ du spectre gaussien de l'écho reçu s'obtient donc en annulant la dérivée de $S_r(f)$

or

$$\frac{d\ e^Y}{df} = e^Y\ \frac{dY}{df}$$

soit

$$\frac{dY}{df} = \frac{d}{df}\left(\frac{-(f-f_o)^2}{2\sigma^2} - 2\alpha fx\right) = 0$$

$$f'_o = f_o - 2\alpha\sigma^2 x \qquad (3)$$

$$\alpha = \frac{f_o - f'_o}{2\sigma^2 x} \qquad (4)$$

7

On voit donc que la comparaison entre la fréquence moyenne $f'_o$ du spectre reçu et la fréquence moyenne du spectre émis permet de calculer l'absorption $\alpha$ car l'écart-type $\sigma$ du spectre d'émission est connu. Une analyse de Fourier du spectre de l'écho permet donc en théorie de déterminer $f'_o$ et par conséquent de calculer $\alpha$ au point x (c'est-a-dire à la distance x de la sonde dans la direction du "tir").

Compte tenu de ce qui précède, une procédure de traitement possible des signaux reçus peut comporter les étapes suivantes :
- on procède à une analyse spectrale de chaque portion de signal d'écho correspondant à un "fenêtrage" prédéterminé de ce dernier, pour pouvoir associer une couleur représentative de l'absorption au voisinage d'un nombre correspondant de points (x) de chaque ligne.

Outre la fréquence moyenne du spectre de chaque échantillon traité, on recalcule aussi l'écart-type plutôt que d'utiliser toujours celui du spectre d'émission comme le suggère la formule (4). En effet, le milieu dans lequel se propage l'onde ultrasonore est loin d'être homogène et l'une des conséquences de ce fait est que l'écart-type varie d'un échantillon de signal à l'autre. Cette obligation de recalculer l'écart-type ne constitue pas une contrainte importante car les processus connus d'analyse spectrale permettent de déterminer facilement la fréquence moyenne $f'_o$ du signal d'écho gaussien et son écart-type. Par "analyse spectrale" on entend donc tout processus de traitement d'un signal (c'est-a-dire une portion du signal d'écho, dans le cas présent) permettant de déterminer $f'_o$ et de préférence $\sigma$.

Sur la figure 1, on a donc représenté une mémoire tampon 25 analogue à la mémoire 15 et chargée de la même façon par le convertisseur 14. Un analyseur de spectre de Fourier 26 est couplé à la mémoire 25 pour recevoir périodiquement à son entrée E une série de valeurs représentatives d'une portion de signal d'écho (fenêtrage). Ces valeurs sont lues dans la mémoire 25 et prélevées au rytme d'un séquenceur de lecture 28. A partir de chaque série de valeurs, l'analyseur 26 relève le spectre de Fourier correspondant et

en déduit $f'_o$ et $\sigma$. Ces deux paramètres apparaissent respectivement aux sorties $S_1$ et $S_2$ de l'analyseur 26. On dispose actuellement sur le marché de composants intégrés conçus pour réaliser la fonction de l'analyseur 26. A titre d'exemple non limitatif, on peut utiliser le processeur type TMS 320 qui est un processeur de traitement de signal fabriqué par la plupart des constructeurs de semiconducteurs. Celui-ci peut être organisé facilement pour le calcul de $f'_o$ et $\sigma$, par mise en oeuvre d'une méthode de transformée de Fourier rapide (FFT, connue en soi) appliquée à la série de valeurs représentatives d'un fenêtrage donné. Les sorties $S_1$ et $S_2$ sont appliquées à des entrées correspondantes d'un circuit de calcul 30 agencé pour appliquer la relation (4) mentionnée plus haut. La mise au point d'un tel circuit de calcul est évidente pour l'homme du métier, puisqu'il nécessite essentiellement un soustracteur numérique, un multiplicateur numérique et un diviseur numérique. Tous ces composants électroniques sont disponibles sur le marché, sous forme de circuits intégrés. Si on dispose d'un ordinateur, on peut aussi écrire un sous-programme réalisant la résolution de l'équation (4). La valeur d'absorption correspondante (c'est-a-dire le second signal mentionné plus haut) est adressé à la mémoire 23 (liaison fonctionnelle 31).

Selon une autre particularité avantageuse de l'invention et pour mieux tenir compte des inhomogénéïtés de la structure à représenter dans laquelle se propogent les ultrasons, le calcul de l'absorption en fonction de la distance $\underline{x}$ grâce à la relation (4) ne fait pas toujours intervenir $f_o$, la fréquence moyenne du spectre de Fourier à l'émission, mais plutôt celle du spectre d'une portion précédente du signal d'écho, déjà calculée. Plus précisément, pour la première portion au moins du signal d'écho correspondant à une séquence émission-réception, on applique la relation (4) en prenant la fréquence moyenne du spectre d'émission en tant que $f_o$. On en détermine donc une fréquence moyenne $f'_o$ qui permet de déterminer le décalage de fréquence $f_o - f'_o$ constituant le numérateur de la relation (4). Par ailleurs, cette valeur de $f'_o$ peut être utilisée en lieu et place de $f_o$ pour le calcul d'autres valeurs d'absorption correspondant à des distances de pénétration x plus importantes. On pourrait envisager de faire cette substitution dès le calcul du second coefficient d'absorption le long de la direction de tir, mais le décalage de fréquence calculé risquerait alors d'être trop faible pour pouvoir être déterminé avec une précision suffisante. C'est pourquoi, on utilisera la fréquence moyenne du spectre d'émission pour les calculs des coefficients d'absorption correspondant aux premières portions du signal d'écho (par exemple les quatre ou cinq premières) puis, pour les calculs ultérieurs, on utilisera la valeur de fréquence moyenne calculée pour une portion d'écho précédente, mais non immédiatement précédente. Par exemple, le coefficient d'absorption correspondant à la $n^{\text{ième}}$ portion d'une ligne serait calculée en prenant la fréquence moyenne calculée pour l'échantillon n – 4 en tant que $f_o$, dans la relation (4). Cela n'implique que de compléter le circuit de calcul 30 par une mémoire 32 de faible capacité (c'est-a-dire capable de stocker 4 ou 5 valeurs de fréquence moyenne à la fois) agencée à partir de registres à décalage et chargée par la sortie $S_1$. La sortie de lecture de cette mémoire est reliée à une entrée du soustracteur numérique précité du circuit 30.

La mémoire 23 est lue périodiquement et les informations numériques qu'elle délivre (c'est-a-dire la luminance et la chrominance) adressent un décodeur 35 faisant par exemple correspondre une gamme de couleurs choisies à une série de valeurs possibles de l'amplitude du second signal. Le décodeur peut notamment comporter une mémoire morte contenant pour chaque couleur choisie les rapports d'intensité des trois couleurs fondamentales. Ces informations sont directement adressées par les valeurs de lecture de la mémoire 23. Les signaux de chrominance et de luminance sont combinés pour délivrer trois signaux, référencés R,V,B sur la figure 1, respectivement appliqués aux entrées de trois convertisseurs Numérique-Analogique 36, 37, 38, dont les sorties pilotent les entrées correspondantes d'un moniteur de télévision couleur 39, classique.

10

D'autres conventions de codage : absorption-couleur sont possibles. Par exemple, si on considère que l'absorption est sensiblement proportionnelle à la fréquence, il peut être avantageux d'adopter le codage suivant en écrivant les signaux de chrominance r, v, b et L le signal de luminance :

$$r + v + b = L$$

$$\frac{v}{r} = \lambda_1 = k \alpha f_1$$

$$\frac{b}{v} = \lambda_2 = k\alpha f_2$$

$f_1$ et $f_2$ étant les fréquences à -3 dB du spectre considéré, facilement déterminables lorsqu'on connaît la fréquence moyenne et l'écart-type. Dans ce cas, les signaux appliqués au moniteur sont obtenus par la résolution du système d'équation ci-dessus. On fait donc correspondre ainsi les rapports $\frac{v}{r}$ et $\frac{b}{v}$ à une estimation de l'absorption à deux fréquences choisies $f_1$ et $f_2$.

Selon une autre variante $\lambda_1$ et $\lambda_2$ ne seront pas reliés à l'absorption à $f_1$ et $f_2$ mais à la différence d'absorption par rapport à une valeur de référence $\alpha_o$ :

$$\lambda_1 = k(\alpha - \alpha_o) f_1 \text{ et } \lambda_2 = k(\alpha - \alpha_o) f_2.$$

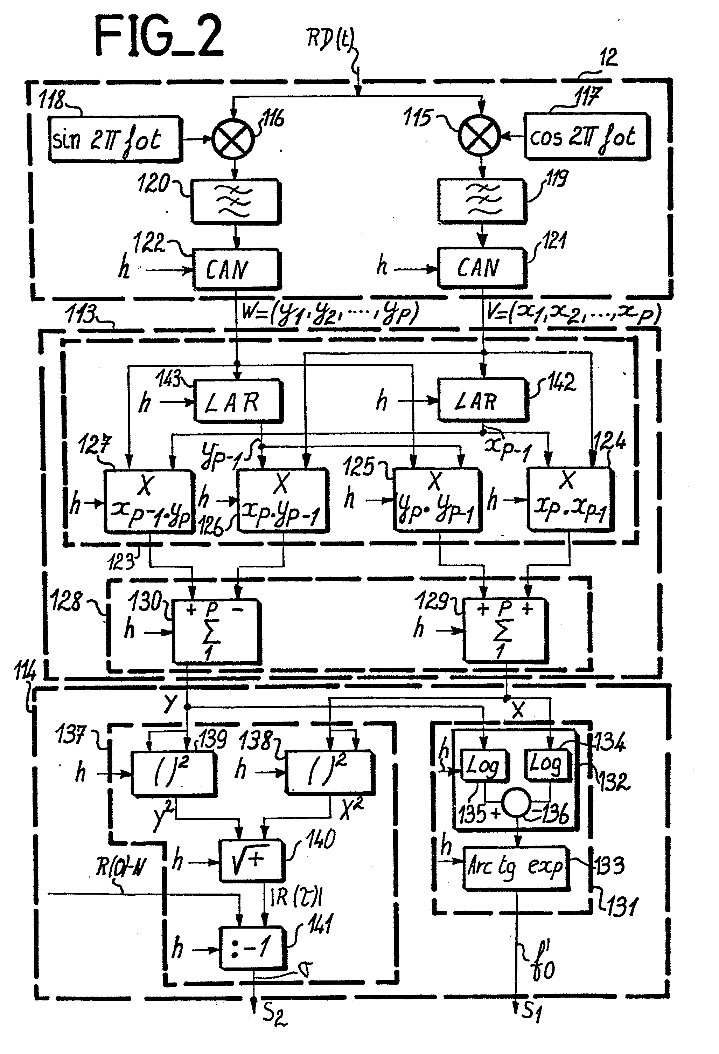

D'autres variantes sont possibles pour réaliser "l'analyse spectrale" du signal d'écho fenêtré. En effet, comme le montre le schéma de la figure 1, les informations utiles résultant de cette analyse sont essentiellement la fréquence moyenne du spectre et, de préférence, son écart-type. Or, les deux paramètres peuvent être déterminés autrement qu'en établissant le spectre de Fourier complet de la portion de signal reçu. Notamment, on peut procéder à une démodulation synchrome en quatrature de chaque portion dudit premier signal (c'est-a-dire le signal d'écho après fenêtrage) et on peut calculer la fonction d'autocorrélation de ce signal démodulé et calculer les dérivées première et seconde de cette fontion d'autocorrélation. On montre que ces dérivées correspondantes respectivement à la fréquence moyenne et à l'écart-type recherchés. Il est donc possible de remplacer l'analyseur de spectre de Fourier 26 par un système réalisant les opérations qui viennent d'être énumérées. La figure 2 représente un tel système.

Sur la figure 2, une portion RD(t) du signal d'écho correspondant à un "fenêtrage" choisi est appliquée simultanément sur des entrées respectives de deux démodulateurs 115 et 116 recevant respectivement sur leur deuxième entrée des signaux en quadrature, $\cos(2\pi f_o t)$ et $\sin(2\pi f_o t)$, délivrés par deux oscillateurs en quadrature 117 et 118, $f_o$ étant la fréquence moyenne d'émission. Ces deux démodulateurs effectuent une transposition du spectre RD(f) de RD(t) d'une grandeur égale à $f_o$. Ils effectuent une démodulation dite en quadrature car les signaux qui les attaquent sur leur deuxième entrée sont en quadrature de phase l'un par rapport à l'autre. En faisant passer chacun des signaux démodulés à travers un filtre passe-bas, respectivement 119 et 120, et en les échantillonnant dans des échantillonneurs respectivement 121 et 122 comprenant chacun un échantillonneur-bloqueur suivi d'un convertisseur analogique-numérique (CAN), on obtient un ensemble de grandeurs complexes dont les parties réelles $x_p$ sont délivrées par l'échantillonneur 121 et dont les parties imaginaires $y_p$ sont délivrées par l'échantillonneur 122. Le signal complexe échantillonné U peut s'écrire symboliquement $U = V + jW$ sachant que V est l'ensemble des valeurs $x_1$, $x_2$, ..., $x_p$ et W l'ensemble des valeurs $y_1$, $y_2$, ...$y_p$. Le dispositif de la figure 2 comporte aussi un circuit 113 pour calculer la fonction d'autocorrélation du signal RD(t) et un circuit 114 pour calculer les dérivés d'ordres 1 et 2 de cette fonction d'autocorrélation. Comme le signal échantillonné U est complexe, la fonction d'autocorrélation discrète $r(\tau)$ est complexe, sa partie réelle est X, et sa partie imaginaire est Y, $\tau$ étant le retard d'autocorrélation sensiblement égal à la période d'échantillonnage.

Le circuit 113 comporte des moyens de retard 123 pour connaître, à chaque échantillon reçu, les grandeurs $x_p$ et $y_p$ du signal complexe échantillonné correspondant à l'échantillon de rang

12

p et pour connaître les mêmes éléments de l'échantillon immédiatement précédent c'est-a-dire de rang p - 1. Pour ce faire, les moyens de retard 123 comportent deux lignes à retard 142 et 143 respectivement reliées en cascade aux sorties des échantillonneurs 121 et 122. Ces lignes à retard 142 et 143 ne délivrent à leurs sorties l'information qu'elles reçoivent à un instant $t$ qu'au bout d'un temps $t + \mathcal{T}$, où $\mathcal{T}$ correspond à la période d'échantillonnage précitée. Dans la pratique, ces lignes à retard peuvent être constituées de registres à décalage, recevant sur leurs entrées en parallèle les informations binaires du signal quantifié délivré par les échantillonneurs, et restituant ces informations sur leurs sorties en parallèle sous l'effet d'une impulsion d'horloge $h$ élaborée à partir du circuit 19 de la figure 1.

Les moyens de retard 123 comportent en outre un jeu de multiplicateurs 124 à 127 recevant sur leurs entrées les parties réelles $x$, ou imaginaires $y$, du signal complexe échantillonné, correspondant à un échantillon donné et à un échantillon précédent, pour effectuer respectivement les multiplications suivantes :

$$x_p \cdot x_{p-1}, \ y_p \cdot y_{p-1}, \ x_p \cdot y_{p-1}, \ x_{p-1} \cdot y_p.$$

Le circuit 113 de calcul de la fonction d'autocorrélation comporte, en cascade avec les moyens de retard 123, des moyens sommateurs 128 comportant deux sommateurs-accumulateurs 129 et 130 reliés respectivement par leurs entrées aux sorties des multiplicateurs 124, 125 et 126, 127. Ces sommateurs-accumulateurs effectuent pour un nombre P d'échantillons le calcul des valeurs réelles X et imaginaires Y de la fonction d'autocorrélation $r(\mathcal{T})$.

Les moyens de calcul 131 de la dérivée d'ordre 1 de la fonction d'autocorrélation, contenus dans le circuit 114 comportent un diviseur 132 effectuant la division de la partie imaginaire Y de la fonction d'autocorrélation par la partie réelle X de cette même fonction. En cascade avec le diviseur 132 se trouve une table d'arctangente 133 recevant en adresse sur ses entrées la valeur de la tangente d'un angle recherché et délivrant en sortie la valeur de cet angle. Pour des raisons de simplification le diviseur 132 est un diviseur logarithmique c'est-a-dire qu'il est composé de deux tables de logarithme, les tables 134 et 135 recevant en adresse respectivement les grandeurs X et Y. Ces tables délivrent en sortie les valeurs Log X et Log Y respectivement. Un soustracteur 136 recevant les valeurs produites par ces tables élabore un résultat (Log Y - Log X) qui est équivalent à Log Y/X. Dans ces conditions, la table 133 du calcul de l'arc tangente (Y/X) est remplacée par une table arc-tangente-exponentiel de Log Y/X. Dans la pratique, tous les calculs effectués par les circuits numérotés 123 à 136 peuvent être effectués par un microprocesseur. Dans ce cas la table 133 est une mémoire morte préprogrammée capable de répondre à la transformation trigonométrique arc-tangente-exponentiel. La valeur $f'_o$ à la sortie des moyens de calcul 31 est la fréquence moyenne recherchée, cette sortie peut donc être considérée comme la sortie $S_1$ de la figure 1.

Les moyens de calcul 137 de la dérivée seconde de la fonction d'autocorrélation comportent des multiplicateurs 138 et 139 qui reçoivent respectivement sur leurs entrées les signaux X et Y. Leurs deux entrées sont interconnectées de sorte qu'ils élèvent les signaux X et Y au carré. Un circuit 140 recevant sur ses entrées les sorties des multilicateurs 138 et 139 effectue l'opération correspondant à la racine carrée de la somme des signaux introduits à ses entrées. Ce faisant la sortie du circuit 140 délivre une grandeur égale au module de r ($\mathcal{T}$).

Un circuit 41 recevant sur une de ses entrées la sortie du circuit 40 et sur une autre entrée une grandeur numérique proportionnelle à (R(0) - N) effectue le rapport de ces deux grandeurs et leur retranche la quantité 1. L'obtention de (R(0) - N) ne présente pas de difficulté : R(0) est l'énergie moyenne du signal reçu c'est-à-dire le signal utile en présence de bruit. Cette énergie peut être mesurée par tous moyens classiques. N est l'énergie du bruit que l'on mesure avec des moyens identiques aux précédents, mais pendant une absence du signal utile c'est-a-dire en dehors de toute émission

14

acoustique. La soustraction (R(0) - N) fait appel à un circuit soustracteur classique. Le circuit 141 délivre donc un signal représentatif de l'écart type $\sigma$ du spectre RD(f) de RD(t), car on démontre que $\sigma$ est proportionnel à $\frac{r(\tau)}{R(o) - N} - 1$. La sortie du circuit 141 est donc l'homologue de la sortie $S_2$ de la figure 1.

Dans tous les cas, si on désire observer d'éventuels mouvements dans la structure analysée c'est-a-dire si on désire un certain rytme d'images, il est possible que les temps de calcul mis en oeuvre dans la voie de chrominance ne permettent pas de "réactualiser" les couleurs à chaque image. On peut alors prendre le parti de renouveler les signaux de chrominance à un rytme plus faible que les signaux de luminance ou encore de prévoir un mode de visualisation noir et blanc en temps réel (avec seulement le signal de luminance) pour permettre à l'utilisateur de trouver par exemple, la meilleure position de la sonde par rapport à la structure, en fonction du détail qu'il cherche à observer. Une fois ce positionnement effectué, l'opérateur peut commander la mise en fonctionnement de la voie de chrominance (travaillant en temps différé) pour obtenir, avec un léger retard, une image en couleur, plus riche d'informations.

15

REVENDICATIONS

1. Procédé d'imagerie ultrasonore de la structure interne d'un corps, une image étant acquise par une succession de séquences émission-réception suivant des directions différentes choisies, caractérisé en ce qu'il consiste, pour chaque séquence, à élaborer un premier signal représentatif d'un premier phénomène acoustique affectant la propagation des ondes ultrasonores dans ledit corps et au moins un second signal (31) représentatif d'au moins un second phénomène acoustique, distinct, affectant ladite propagation et à reconstituer l'image (39) en utilisant ledit premier signal pour l'élaboration d'un signal de luminance et ledit second signal pour l'élaboration de signaux de chrominance (35).

2. Procédé selon la revendication 1, caractérisé par un codage de chrominance faisant correspondre une gamme de couleurs choisies à une série de valeurs possibles de l'amplitude dudit second signal.

3. Procédé selon la revendication 1 ou 2, caractérisé en ce que ledit premier phénomène est l'écho ultrasonore réfléchi par ledit corps et en ce que ledit second phénomène est l'absorption de l'onde ultrasonore dans ledit corps.

4. Procédé selon la revendication 3, caractérisé en ce que ledit second signal est élaboré à partir d'une analyse spectrale (26 - figure 2 dudit écho ultrasonore.

5. Procédé selon la revendication 4, caractérisé en ce qu'on génère une onde ultrasonore de spectre de Fourier sensiblement gaussien à l'émission et en ce que ladite analyse spectrale consiste essentiellement à déterminer la fréquence moyenne ($S_1$) du spectre de Fourier dudit écho et de préférence son écart-type ($S_2$) pour en déduire chaque fois une valeur d'absorption.

6. Procédé selon la revendication 5, caractérisé en ce que ladite analyse spectrale consiste à établir le spectre de Fourier dudit premier signal par une méthode de transformée de Fourier

16

rapide, connue en soi, et à en déduire une fréquence moyenne et de préférence un écart-type.

7. Procédé selon la revendication 5, caractérisé en ce que ladite analyse spectrale consiste notamment à effectuer une démodulation synchrone en quadrature (115, 116) dudit premier signal, à calculer la fonction d'autocorrélation (113) de ce signal démodulé et à calculer les dérivées première (131) et seconde (137) de cette fonction d'autocorrélation, respectivement représentatives de ladite fréquence moyenne et dudit écart-type.

8. Procédé selon l'une des revendications précédentes, caractérisé en ce qu'il consiste à fenêtrer temporellement un signal représentatif dudit premier phénomène pendant chaque séquence émission-réception pour individualiser des portions de celui-ci correspondant respectivement à des distances de pénétrations différentes dans ladite structure, suivant la direction correspondante, à élaborer un second signal précité à partir de chaque portion et à affecter des signaux de chrominance correspondants, à ladite distance de pénétration, suivant la direction de tir de ladite séquence émission-réception.

9. Procédé selon l'ensemble des revendications 5 et 8, caractérisé en ce que pour la première portion au moins dudit signal d'écho, on déduit ledit second signal représentatif de l'absorption en déterminant le décalage entre la fréquence moyenne du spectre de Fourier de l'onde ultrasonore émise et la fréquence moyenne du spectre de Fourier de ladite première portion et en ce que pour d'autres portions correspondant à des distances de pénétration plus importantes, on déduit ledit second signal représentatif de l'absorption en déterminant le décalage entre la fréquence moyenne du spectre de Fourier de cette portion et la fréquence moyenne du spectre de Fourier d'une portion précédente, déjà calculée.

10. Procédé selon la revendication 5, caractérisé en ce qu'on fait correspondre des rapports entre deux signaux de chrominance ($\frac{v}{r}$, $\frac{b}{v}$) à une estimation de l'absorption pour deux fréquences choisies, respectivement.

17

11. Procédé selon la revendication 5, caractérisé en ce qu'on fait correspondre des rapports entre deux signaux de chrominance $(\frac{v}{r}, \frac{b}{v})$ à une estimation d'une différence d'absorption par rapport à une valeur de référence ($\alpha_o$), pour deux fréquences choisies, respectivement.

# FIG_1

1/2

0149939

FIG_2

2/2

0149939

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| X | US-A-4 412 544 (BERETSKY et al.)<br>* Résumé; colonne 2, lignes 25-35; colonne 3, lignes 13-30; colonne 5, lignes 54-68; colonne 9, ligne 48 - colonne 10, ligne 15 *<br>--- | 1,2 | G 01 S 7/62<br>G 01 S 15/02<br>G 01 S 15/89 |
| Y | US-A-4 176 658 (KOSSOFF et al.)<br>* Page de garde; résumé; colonne 2, lignes 6-58; colonne 3, ligne 11 - colonne 4, dernière ligne *<br>--- | 1-6 | |
| Y | FR-A-2 280 939 (CIT-ALCATEL)<br>* Page 1, lignes 19-37; page 2, lignes 25-36; page 4, ligne 19 - page 7, ligne 15; page 9, lignes 34-37 *<br>--- | 1-6 | |
| Y | IEEE 1976 ULTRASONICS SYMPOSIUM PROCEEDINGS, 1976, pages 58-59, New York, US; J.P. JONES et al.: "Two dimensional display of spectral information and its application to diagnostic medicine"<br>* En entier *<br>--- | 1-6 | **DOMAINES TECHNIQUES RECHERCHES (Int. Cl.4)**<br><br>G 01 S<br>G 09 G |
| D,A | IEEE 1976 ULTRASONICS SYMPOSIUM PROCEEDINGS, 1976, pages 44-47, New York, US; R. KUC et al.: "Parametric estimation of the acoustic attenuation coefficient slope for soft tissue"<br>---     -/- | 3-5 | |

Le présent rapport de recherche a été établi pour toutes les revendications

| Lieu de la recherche | Date d'achèvement de la recherche | Examinateur |
|---|---|---|
| LA HAYE | 27-03-1985 | OLDROYD D.L. |

**0149939**
Numéro de la demande

**RAPPORT DE RECHERCHE EUROPEENNE**

Office européen
des brevets

EP 84 40 2634

## DOCUMENTS CONSIDERES COMME PERTINENTS

Page 2

| Catégorie | Citation du document avec indication, en cas de besoin, des parties pertinentes | Revendication concernée | CLASSEMENT DE LA DEMANDE (Int. Cl.4) |
|---|---|---|---|
| A | US-A-3 856 985 (YOKOI et al.) --- | | |
| A | FR-A-2 147 469 (CIT ALCATEL) --- | | |
| A | GB-A-2 089 168 (NATIONAL HEART & CHEST HOSPITALS) --- ----- | | |

DOMAINES TECHNIQUES RECHERCHES (Int. Cl.4)

Le présent rapport de recherche a été établi pour toutes les revendications

| Lieu de la recherche | Date d'achèvement de la recherche | Examinateur |
|---|---|---|
| LA HAYE | 27-03-1985 | OLDROYD D.L. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503 03 82